# EUROPÄISCHE PATENTSCHRIFT

(11) **EP 2 911 906 B1**
(45) Veröffentlichungstag und Bekanntmachung des Hinweises auf die Patenterteilung: **25.05.2016**
(21) Anmeldenummer: 13779738.7
(22) Anmeldetag: 18.10.2013
(51) Int. Cl.: B60K 23/08, B60W 10/02

(54) **VERFAHREN UND SYSTEM ZUM BETREIBEN EINES ANTRIEBSSTRANGS EINES KRAFTWAGENS**
METHOD AND SYSTEM FOR OPERATING A DRIVETRAIN OF A MOTOR VEHICLE
PROCÉDÉ ET SYSTÈME PERMETTANT DE FAIRE FONCTIONNER UNE CHAÎNE CINÉMATIQUE D'UN VÉHICULE AUTOMOBILE

(30) Priorität: 24.10.2012 DE 102012020908
(43) Veröffentlichungstag der Anmeldung: 02.09.2015
(73) Patentinhaber: Audi AG, 85045 Ingolstadt (DE)
(72) Erfinder: BRÜHL, Hans Jörg, 85092 Kösching (DE); WEIDEMANN, Dieter, 85134 Stammham (DE); HANICKEL, Heiko, 85110 Kipfenberg (DE)
(74) Vertreter: Wohnert, Dietmar
(86) Internationale Anmeldenummer: PCT/EP2013/003142
(87) Internationale Veröffentlichungsnummer: WO 2014/063799

(56) Entgegenhaltungen:
- DE-A1-102009 005 378
- GB-A- 2 488 155

## Beschreibung

Die Erfindung betrifft ein Verfahren zum Betreiben eines Antriebsstrangs eines Kraftwagens der im Oberbegriff des Patentanspruchs 1 angegebenen Art. Des Weiteren betrifft die Erfindung ein System zum Betreiben eines Antriebsstrangs eines Kraftwagens der im Oberbegriff des Patentanspruchs 8 angegebenen Art.

Ein gattungsmäßiges Verfahren zum Betreiben eines Antriebsstrangs eines Kraftwagens ist aus der DE 10 2009 005 378 A1 bekannt. Es wird zumindest eine eine Bewegung des Kraftwagens quantifizierende und/oder beeinflussende Größe erfasst und ein Allradantrieb des Kraftwagens in Abhängigkeit von der Größe zugeschaltet. Insbesondere ist ein Sensor zur Detektion eines Radschlupfs an einer permanent angetriebenen Primärachse vorgesehen, wobei in Abhängigkeit eines detektierten Radschlupfes an der Primärachse der Allradantrieb bzw. eine Sekundärachse zugeschaltet wird.

Die EP 2 308 711 B1, EP 2 243 653 A2, US 20 120 021 864 A1 und DE 10 2010 046 235 A1 zeigen jeweils einen Antriebsstrang eines Kraftwagens, welcher über einen zuschaltbaren Allradantrieb verfügt. Den offenbarten Antriebssträngen ist gemeinsam, dass an einer zuschaltbaren Sekundärachse eine Kupplung vorgesehen ist, mittels welcher ein an der im Allradantrieb angetriebenen Sekundärächse vorgesehenes Achsgetriebe von einem Kraftfluss zwischen den an der Sekundärachse angeordneten Rädern getrennt werden kann.

Die EP 0 241 382 B1 zeigt eine Hinterachse für einen Kraftwagen mit einer Kupplung, mittels welcher ein an der Hinterachse vorgesehenes Achsgetriebe von einem Kraftfluss zwischen den beiden Hinterrädern getrennt werden kann.

Die gattungsgemäße GB 2488155 A zeigt ein Verfahren zum Betreiben eines Antriebsstrangs eines Kraftwagens. Sobald erfasst wird, dass an einem angetriebenen Rad des Antriebsstrangs ein Schlupf auftritt, welcher einen vorgegebenen Schwellwert überschreitet, wird anhand mehrerer, den Kraftwagen betreffender Parameter, wie beispielsweise einem Lenkeinschlagwinkel oder einer aktuellen Beschleunigung des Kraftwagens, ermittelt, ob der Schlupf sich weiter erhöhen wird. Falls dies der Fall sein sollte, wird ein Allradantrieb zugeschaltet.

Es ist die Aufgabe der vorliegenden Erfindung, ein Verfahren und ein System zum Betreiben eines Antriebsstrangs eines Kraftwagens der eingangs genannten Art bereitzustellen, mittels welchen ein zuschaltbarer Allradantrieb eines Kraftwagens auf verbesserte Art und Weise eingesetzt werden kann.

Diese Aufgabe wird durch ein Verfahren und ein System zum Betreiben eines Antriebsstrangs eines Kraftwagens mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei einem erfindungsgemäßen Verfahren zum Betreiben eines Antriebsstrangs eines Kraftwagens wird zumindest eine eine Bewegung des Kraftwagens quantifizierende und/oder beeinflussende Größe erfasst und ein Allradantrieb des Kraftwagens in Abhängigkeit von der Größe zugeschaltet, wobei sich das erfindungsgemäße Verfahren dadurch auszeichnet, dass basierend auf der zumindest einen Größe abgeschätzt wird, ob eine relevante Fahrsituation bevorsteht, und nur in diesem Fall der Allradantrieb vor Eintreten der relevanten Situation zugeschaltet wird. Mit anderen Worten wird anhand der zumindest einen die Bewegung des Kraftwagens quantifizierenden und/oder beeinflussenden Größe überwacht, ob mit einer relevanten Fahrsituation zu rechnen ist, wobei nur in diesem Fall der Allradantrieb rechtzeitig zugeschaltet wird, bevor die relevante Situation eintreten kann. Unter einer relevanten Situation ist beispielsweise ein an der permanent angetriebenen Primärachse auftretender Radschlupf, ein Unter- oder Übersteuern und dergleichen zu verstehen. Diese Aufzählung von Beispielen ist jedoch nicht abschließend zu verstehen.

Allgemein sind unter einer relevanten Fahrsituation Fahrsituationen zu verstehen, bei welchen mit einer Abweichung zwischen einem tatsächlichen Fahrverhalten des Kraftwagens und einem von einem Fahrer vorgegebenen bzw. gewünschten Fahrverhalten zu rechnen ist, wobei im Extremfall ein Grenzbereich des Kraftwagens überschritten wird und somit mit einem Kontrollverlust eines Fahrers über den Kraftwagen zu rechnen ist. Ferner ist unter einer relevanten Fahrsituation jede Situation zu verstehen, in der ein für den Fahrer auflösbares unterschiedliches Fahrverhalten zwischen Einachs- und Allradbetrieb besteht. Dies beinhaltet nicht nur fahrsicherheitsrelevante, sondern auch fahrdynamik- und komfortrelevante Fahrsituationen.

Es ist erfindungsgemäß vorgesehen, den Allradantrieb des Kraftwagens, also die bislang noch nicht angetriebene Sekundärachse des Kraftwagens, zuzuschalten, noch bevor eine relevante Fahrsituation eintritt, so dass durch Zuschalten des Allradantriebs eine zusätzliche Verbesserung der Fahrdynamik des Kraftwagens erzielt werden kann, noch bevor es zu der eigentlich relevanten Fahrsituation kommen kann. Eine bei einem reinen Zweiradantrieb noch als relevant einzuschätzende Fahrsituation kann somit nach Zuschalten des Allradantriebs eine nicht mehr relevante Fahrsituation sein, da aufgrund der zusätzlich angetriebenen Räder der Sekundärachse eine verbesserte Fahrdynamik des Kraftwagens erzielt werden kann. Insbesondere wird der Allradantrieb des Kraftwagens so rechtzeitig zugeschaltet, dass noch vor einem Eingreifen von Fahrdynamikregelsystemen, beispielsweise einer elektronischen Stabilitätskontrolle, einer Traktionskontrolle und dergleichen, das Fahrverhalten des Kraftwagens derart verbessert wird, dass gegebenenfalls gar kein Eingriff oder ein wesentlich verminderter Eingriff einer Fahrdynamikregelung erforderlich wird. Durch das vorausschauende Zuschalten des Allradantriebs des Kraftwagens im Bedarfsfall kann ein verbessertes Fahrverhalten des Kraftwagens mit entsprechend erhöhten Sicherheitsreserven erzielt werden. Gleichzeitig wird dadurch, dass der Allradantrieb nur dann zugeschaltet wird, wenn dieser wirklich erforderlich wird, eine entsprechende Kraftstoffersparnis ermöglicht.

Des Weiteren ist es erfindungsgemäß vorgesehen, dass, nachdem der Allradantrieb zugeschaltet worden ist, anhand der zumindest einen Größe und oder weiterer die Bewegung des Kraftwagens quantifizierenden und/oder beeinflussenden Größen ermittelt wird, ob ein Abschalten des Allradantriebs zu einer relevanten Fahrsituation führen würde, und falls dies nicht der Fall ist, der Allradantrieb nach einer definierten Haltezeit abgeschaltet wird. Vorzugsweise wird quasi permanent (beispielsweise bis zu 150 Mal pro Sekunde) überprüft, ob ein vollständiges Abschalten des Allradantriebs, also ein reiner Zweiradantrieb, also ein alleiniger Antrieb der permanent angetriebenen Primärachse, zu einer relevanten Fahrsituation führen würde. Falls dies nicht der Fall sein sollte, wird der Allradantrieb nach der definierten Haltezeit wieder abgeschaltet, so dass durch die bedarfsgerechte Nutzung des Allradantriebs ein besonders energieeffizienter Betrieb des Kraftwagens ermöglicht wird.

Zudem ist es erfindungsgemäß vorgesehen, dass als eine die Bewegung des Kraftwagens quantifizierende und/oder beeinflussende Größe jeweilige Einzelradgeschwindigkeiten, ein Lenkradeinschlag, ein Lenkradwinkelgradient, ein Fahrpedalwert, ein Fahrpedalwertgradient, ein Bremspedalwert, eine Querbeschleunigung des Kraftwagens, eine Gierrate des Kraftwagens, eine Längsbeschleunigung des Kraftwagens und/oder eine aktuelle Übersetzung des Kraftwagens ermittelt werden. Für die genannten Größen können jeweils betriebsmodusabhängig unterschiedliche einzelne Schwellwerte vorgegeben sein. Zusätzlich oder alternativ ist es allerdings auch möglich, dass die verschiedenen Größen untereinander kombiniert bzw. miteinander verrechnet werden, wobei für diese berechneten Größen ebenfalls unterschiedliche Schwellwerte je Betriebsmodus vorgegeben sein können. Durch die Erfassung der genannten Größen können beispielsweise in einer Kombination mit einem entsprechend hinterlegten Fahrzeugmodell Reibwerte der Fahrbahn, ein Über- und/oder Untersteuern, jeweiliger Schlupf an den Rädern des Kraftwagens, Radmomente, von den Reifen auf die Fahrbahn übertragbare Momente und dergleichen vorausschauend berechnet werden.

Eine weitere vorteilhafte Ausführungsform der Erfindung sieht vor, dass beim Abschalten des Allradantriebs ein an einer lediglich im Allradbetrieb angetriebenen Sekundärachse vorgesehenes Achsgetriebe von einem Kraftfluss zwischen zwei Rädern getrennt wird. Dadurch können Reibungsverluste durch Mitschleppen eines.Tellerrads und der Kardanwelle erheblich reduziert werden, wobei lediglich noch Ausgleichszahnräder eines Achsausgleichsdifferenzials mitgeschleppt werden müssen. Im Falle der lediglich angetriebenen Primärachse können aufgrund der verminderten Reibungsverluste erhebliche Energieeinsparungen während des Betriebs des Kraftwagens erzielt werden.

Gemäß einer weiteren vorteilhaften Ausführungsform der Erfindung ist es vorgesehen, dass zum Abschätzen, ob eine relevante Fahrsituation bevorsteht, zumindest eine die Bewegung des Kraftwagens quantifizierende und/oder beeinflussende Größe mit einem vorgegebenen Schwellwert verglichen wird. Dadurch kann auf besonders einfache Weise entschieden werden, ob mit einer relevanten Fahrsituation zu rechnen ist oder nicht. Insbesondere wird der Schwellwert derart vorgegeben, dass bei Erreichen oder Überschreiten des Schwellwertes ein solch unterschiedliches Fahrverhalten zwischen dem Einachs- und Allradbetrieb gegeben ist, dass dieser von einem Fahrer auflösbar, also wahrnehmbar wäre. Vorzugsweise können für mehrere, die Bewegung des Kraftwagens quantifizierende und/oder beeinflussende Größen entsprechende Schwellwerte vorgegeben werden, bei deren Erreichen öder Überschreiten für einen Fahrer ein unterscheidbares Fahrverhalten zwischen dem Einachs- und Allradbetrieb gegeben wäre.

Eine vorteilhafte Ausführungsform der Erfindung sieht vor, dass jeweils unterschiedliche Werte für den Schwellwert und/oder die Haltezeit in Abhängigkeit von einem jeweils aktivierten Betriebsmodus des Antriebsstrangs vorgegeben werden. Bei den Betriebsmodi kann es sich beispielsweise um einen Betriebsmodus handeln, bei welchem der Kraftwagen besonders energieeffizient betrieben werden soll, einem Betriebsmodus, in welchem der Kraftwagen besonders dynamisch bewegt werden soll, einem Betriebsmodus, in welchem der Kraftwagen besonders komfortabel bewegt werden soll, und dergleichen. Entsprechend des ausgewählten Betriebsmodus des Antriebsstrangs werden somit unterschiedliche Schwellwerte und/oder Haltezeiten vorgegeben, so dass ein Zuschalten und Abschalten des Allradantriebs zur bestmöglichen Erfüllung der jeweiligen Vorgaben der jeweiligen Betriebsmodi eingesetzt werden kann.

Eine weitere vorteilhafte Ausführungsform der Erfindung sieht vor, dass die jeweiligen Betriebsmodi des Antriebsstrangs automatisch in Abhängigkeit von zumindest einem weiteren augenblicklich aktivierten Betriebsmodus des Kraftwagens aktiviert werden. Beispielsweise kann bei einem automatisierten Getriebe des Kraftwagens ein Sportprogramm ausgewählt worden sein, so dass der entsprechend passende dynamische Betriebsmodus des Antriebsstrangs automatisch eingestellt wird, wodurch die Getriebesteuerung und die Steuerung des Antriebsstrangs aufeinander abgestimmt erfolgen können. Des Weiteren ist es auch denkbar, dass für den gesamten Kraftwagen unterschiedliche Betriebsmodi vorgebbar sind, wobei entsprechende Betriebsmodi des Antriebsstrangs unter Berücksichtigung der Auswahl der übergeordneten Betriebsmodi des Kraftwagens automatisch ausgewählt werden.

In weiterer vorteilhafter Ausgestaltung der Erfindung ist es vorgesehen, dass die jeweiligen Betriebsmodi des Antriebsstrangs zumindest während eines auswählbaren Automatikmodus des Antriebsstrangs in Abhängigkeit von der Art und Weise, wie der Kraftwagen von dem Fahrer bewegt wird, aktiviert werden. Dadurch erfolgt eine automatische Anpassung der jeweiligen Schwellwerte für die Zu- und Abschaltung des Allradantriebs in Abhängigkeit davon, wie ein jeweiliger Fahrer den Kraftwagen bewegt. Beispielsweise können für unterschiedliche Fahrer des Kraftwagens unterschiedliche Benutzerprofile angelegt und fortlaufend verfeinert werden, so dass fahrerabhängig im Automatikmodus des Antriebsstrangs eine besonders effektive Zu- und Abschaltung des Allradantriebs erfolgen kann.

In weiterer vorteilhafter Ausgestaltung der Erfindung ist es vorgesehen, dass für die Zuschaltung und Abschaltung des Allradantriebs für die unterschiedlichen Betriebsmodi jeweils unterschiedliche Schwellwerte vorgegeben werden. Die Differenz zwischen den jeweiligen Schwellwerten, mit welchen eine bestimmte die Bewegung quantifizierende und/oder beeinflussende Größe zu vergleichen ist, wird dabei so groß gewählt, dass nicht ein fortlaufendes bzw. permanentes Hin- und Herschalten zwischen dem Allradantrieb und dem Zweiradantrieb erfolgt.

Ein erfindungsgemäßes System zum Betreiben eines Antriebsstrangs eines Kraftwagens umfasst eine Erfassungseinrichtung, welche dazu ausgelegt ist, zumindest eine eine Bewegung des Kraftwagens quantifizierende und/oder beeinflussende Größe zu erfassen, eine Steuereinrichtung, welche dazu ausgelegt ist, einen Allradantrieb des Kraftwagens in Abhängigkeit von der Größe zuzuschalten, wobei sich das erfindungsgemäße System dadurch auszeichnet, dass die Steuereinrichtung dazu ausgelegt ist, basierend auf der zumindest einen Größe abzuschätzen, ob eine relevante Fahrsituation bevorsteht und nur in diesem Fall den Allradantrieb vor Eintreten der relevanten Situation zuzuschalten. Des Weiteren ist die Steuereinrichtung dazu ausgelegt, nachdem der Allradantrieb zugeschaltet worden ist, anhand der zumindest einen Größe und/oder weiterer die Bewegung des Kraftwagens quantifizierenden und/oder beeinflussenden Größen zu ermitteln, ob ein Abschalten des Allradantriebs zu einer relevanten Fahrsituation führen würde, und falls dies nicht der Fall ist, den Allradantrieb nach einer definierten Haltezeit abzuschalten. Vorteilhafte Ausgestaltungen des erfindungsgemäßen Verfahrens sind als vorteilhafte Ausgestaltungen des Systems anzusehen, wobei hier insbesondere das System Mittel umfasst, mit denen die Verfahrensschritte durchführbar sind.

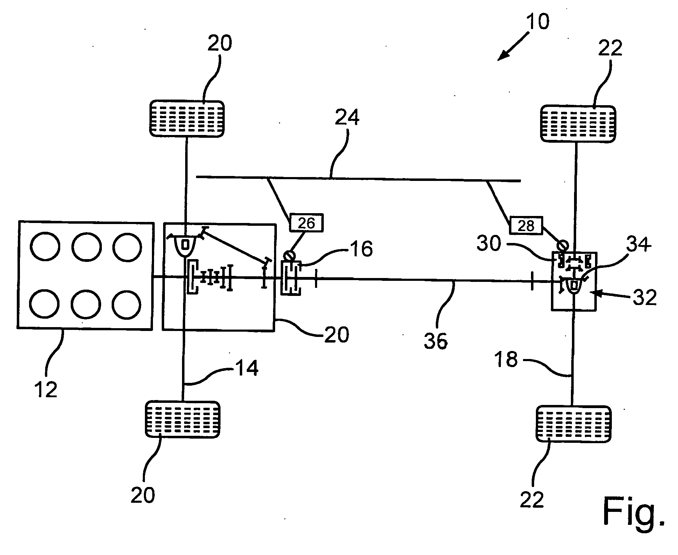

Weitere Vorteile, Merkmale und Einzelheiten der Erfindung ergeben sich aus der nachfolgenden Beschreibung eines bevorzugten Ausführungsbeispiels sowie anhand der Zeichnung.

Ausführungsbeispiele der Erfindung werden nachfolgend anhand der einzigen Figur näher erläutert, in welcher ein Antriebsstrang eines Kraftwagens gezeigt ist.

Ein Antriebsstrang 10 eines nicht näher bezeichneten Kraftwagens umfasst eine mittels eines längs eingebauten Motors 12 angetriebene Primärachse 14 sowie eine über eine erste Kupplung 16 zuschaltbare Sekundärachse 18. Über ein Getriebe 20 wird die vom Motor 12 bereitgestellte Leistung bzw. das bereitgestellte Drehmoment übersetzt und auf die Primärachse 14 und somit auch auf die Vorderräder 20 übertragen. Der Antriebsstrang 10 kann auch einen quer eingebauten Motor 12 aufweisen. Zudem kann, wie hier gezeigt, ein Frontmotor aber auch ein Heckmotor eingesetzt werden. Je nach Einbaulage des Motors 12 sind die restlichen Komponenten des Antriebsstrangs 10 derart angepasst, dass ein zu- und abschaltbarer Allradantrieb gegeben ist.

Mittels der ersten Kupplung 16, bei welcher es sich im vorliegenden Fall um eine Lamellenkupplung handelt, kann das von dem Motor 12 bereitgestellte Moment bzw. die bereitgestellte Leistung variabel zwischen der permanent angetriebenen Primärachse 14 und der zuschaltbaren Sekundärachse 18 verteilt werden, so dass an der Sekundärachse 18 angeordnete Hinterräder 22 ebenfalls angetrieben werden können.

Der vorliegende Antriebsstrang 10 ist dazu ausgelegt, üblicherweise als reiner Fronttriebler betrieben zu werden, wobei lediglich bei Bedarf ein Allradbetrieb zugeschaltet, also die Zuschaltung der Sekundärachse 18, werden kann. Alternativ kann es aber auch vorgesehen sein, der Antriebsstrang 10 als Hecktriebler mit zuschaltbarem Vorderradantrieb ausgebildet ist. Während des Zweiradantriebs des Kraftwagens werden mittels einer hier nicht dargestellten Erfassungseinrichtung permanent eine Bewegung des Kraftwagens quantifizierende und/oder beeinflussende Größen erfasst, welche beispielsweise von einem CAN-Bus-System, einem FlexRay-System oder einem vergleichbaren Kommunikationssystem 24 bereitgestellt werden.

Bei den die Bewegung des Kraftwagens quantifizierenden und/oder beeinflussenden Größen kann es sich beispielsweise um jeweilige Einzeiradgeschwindigkeiten, einen Lenkradeinschlag, einen Lenkradwinkelgradienten, einen Fahrpedalwert, einen Fahrpedalwertgradienten, einen Bremspedalwert, eine Querbeschleunigung des Kraftwagens, eine Gierrate des Kraftwagens, eine Längsbeschleunigung des Kraftwagens und/oder eine aktuelle Übersetzung des Kraftwagens handeln.

Im vorliegenden Fall sind zwei Steuereinrichtungen 26, 28 vorgesehen, welche dazu ausgelegt sind, einen Allradantrieb des Kraftwagens, also die Sekundärachse 18, in Abhängigkeit von den erfassten Größen zuzuschalten. Basierend auf den permanent erfassten Größen schätzen die Steuereinrichtungen 26, 28 ab, ob eine relevante Fahrsituation bevorsteht, und nur in diesem Fall wird durch die Steuereinrichtungen 26, 28 der Allradantrieb vor Eintreten der relevanten Situation zugeschaltet.

Die Steuereinrichtung 26 ist dabei dazu ausgelegt, die erste Kupplung 16 zu steuern, mittels welcher die Momentenverteilung zwischen der Primärachse 14 und der Sekundärachse 18 gesteuert wird. Die Steuereinrichtung 28 dient dazu, eine zweite Kupplung 30 zu steuern, mittels welcher ein Achsgetriebe 32 von einem Kraftfluss zwischen den beiden Hinterrädern 22 getrennt werden kann.

Mittels der permanent erfassten Größen kann beispielsweise eine Schlupferkennung, eine Reibwertschätzung, eine Radmomentenberechnung, eine Über- und Untersteuerungserkennung, beispielsweise unter Zuhilfenahme eines bereitgestellten Fahrzeugmodells, erfolgen, so dass relevante Fahrsituationen unter Berücksichtigung der erfassten Größen vorhergesagt werden können. Beispielsweise kann durch Erfassung eines Lenkeinschlaggradienten, also der Geschwindigkeit, mit welcher ein Lenkeinschlag erfolgt, in Kombination mit der Erfassung des Fahrpedalwertgradienten, also wie schnell ein Gaspedal heruntergedrückt wird, ermittelt werden, ob beispielsweise bei einem reinen Frontantrieb mit einer relevanten Fahrsituation des Kraftwagens zu rechnen ist. Sollte eine solche relevante Situation vorhergesagt werden, werden die beiden Kupplungen 16, 30 mittels der Steuereinrichtung 26, 28 entsprechend betätigt, um einen Allradbetrieb des Kraftwagens herzustellen, also die Sekundärachse 18 und somit auch die Hinterräder 22 anzutreiben.

Um den Allradantrieb zuschalten zu können, wird zuerst die Allradkupplung 16 betätigt, um die zunächst noch stehenden Komponenten auf Zieldrehzahl zu bringen. Dann wird die Kupplung 30 geschlossen, um den Kraftfluss an die Sekundärachse 18 zu ermöglichen. In Abhängigkeit von der Zuschaltbedingungen werden unterschiedliche Allradbetrieb-Haltezeiten hinterlegt, um die Häufigkeit der Zu- und Abschaltungen zu reduzieren.

Nachdem der Allradantrieb zugeschaltet worden ist, werden die die Bewegung des Kraftwagens quantifizierenden und/oder beeinflussenden Größen weiterhin permanent überwacht, wobei ermittelt wird, ob ein Abschalten des Allradantriebs, bzw. ein vollständiges Abschalten des Antriebs der Sekundärachse 18, zu einer relevanten Fahrsituation führen würde. Falls dies nicht der Fall sein sollte, weil der Kraftwagen beispielsweise geradeaus bewegt wird oder eine Kurve mit einer entsprechend moderaten Geschwindigkeit durchfahren wird, wird der Allradantrieb wieder abgeschaltet.

Zum Abschalten des Allradantriebs öffnet die Steuereinrichtung 26 die Kupplung 16, so dass die Leistung und das bereitgestellte Moment des Motors 12 alleine auf die Primärachse 14 übertragen wird. Anschließend wird mittels der Steuereinrichtung 28 auch die zweite Kupplung 30 geöffnet, so dass das Achsgetriebe 32 von dem Kraftfluss zwischen den beiden Hinterrädern 22 getrennt wird. Bei der zweiten Kupplung 30 handelt es sich beispielsweise um eine Klauenkupplung, welche an einer nicht näher bezeichneten Abtriebsflanschwelle des Achsgetriebes 32 vorgesehen ist, wodurch der Kraftfluss zwischen dem Achsgetriebe und einem der Räder 22 und somit zwischen den beiden Rädern 22 unterbrochen werden kann.

Sobald beide Kupplungen 16, 30 geöffnet worden sind, kommen entsprechende Komponenten zwischen den Kupplungen 16, 30 zum Stehen. So ist einerseits das Achsgetriebe 32 von dem Motor 12 getrennt, wodurch entsprechende Reibungsverluste durch Übertragung von Drehmomenten auf die Sekundärachse 18 reduziert werden. Ferner werden auch die Reibungsverluste durch Mitschleppen eines Tellerrads 34 und einer Kardanwelle 36 erheblich reduziert. Lediglich nicht näher bezeichnete Ausgleichszahnräder eines ebenfalls nicht näher bezeichneten Hinterachsausgleichsdifferenzials werden mitgeschleppt. Die dadurch entstehenden Reibungsverluste sind jedoch tolerierbar. Der finanzielle und konstruktive Aufwand, welche für eine vollständige Entkopplung der hinteren Achse und des Hinterachsdifferenzials notwendig wäre, stünden in keinem Verhältnis zur erzielbaren Energieeinsparung.

Um die Betätigung der beiden Kupplungen 16, 30 sinnvoll miteinander zu kombinieren, kommt eine Betriebsstrategie zum Einsatz, die einem Fahrer neben einer automatisch ablaufenden Steuerung auch noch einen gewissen Rahmen zur Einflussnahme auf die Steuerung gibt. Neben einem Automatikmodus des Antriebsstrangs, bei welchem die Zu- und Abschaltung des Allradantriebs vollständig automatisch abläuft, können noch weitere Betriebsmodi bereitgestellt werden. Beispielsweise kann ein Efficiency-Modus bereitgestellt werden, bei welchem die Zu- und Abschaltung des Allradantriebs derart erfolgt, dass der Kraftwagen besonders energieeffizient betrieben werden kann. Des Weiteren kann ein sogenannter Dynamic-Modus vorgesehen werden, bei welchem eine besonders dynamische Bewegung des Kraftwagens vorgesehen ist, so dass die Zu- und Abschaltung des Allradantriebs dahingehend erfolgt, dass eine besonders dynamische und dabei auch sichere Bewegung des Kraftwagens unterstützt wird. Zudem kann auch beispielsweise ein Komfortmodus vorgesehen sein, bei welchem die Zu- und Abschaltung des Allradantriebs insbesondere im Hinblick auf eine Komfortverbesserung beim Führen des Kraftwagens eingesetzt wird.

Allgemein werden für die verschiedenen permanent erfassten Größen, welche die Bewegung des Kraftwagens quantifizieren und/oder dessen Bewegung beeinflussen, jeweilige Schwellwerte vorgegeben, mit welchen die erfassten Größen permanent verglichen werden. Betriebsmodusabhängig werden dabei jeweils unterschiedliche Werte für die Schwellwerte und Haltezeiten vorgegeben, wobei für die Zuschaltung und Abschaltung des Allradantriebs für die unterschiedlichen Betriebsmodi ebenfalls jeweils unterschiedliche Schwellwerte und Haltezeiten vorgegeben werden, um ein andauerndes Zu- und Abschalten des Allradantriebs zu unterbinden.

Hat ein Fahrer beispielsweise den Efficiency-Modus ausgewählt, erfolgt eine geringe Vorsteuerung des Allradantriebs. Dies bedeutet, dass der Allradantrieb relativ spät zugeschaltet und relativ früh wieder abgeschaltet wird, so dass so wenig Allradphasen wie möglich und somit auch so kurze Allradzeiten wie möglich vorliegen. Dadurch wird eine besonders energieeffiziente Bewegung des Kraftwagens unterstützt.

Wird der Kraftwagen hingegen im Dynamic-Modus betrieben, erfolgt besonders viel Vorsteuerung des Allradantriebs. Dies bedeutet, dass eine besonders frühe Zuschaltung des Allradantriebs erfolgt, wobei insgesamt auch längere Allradphasen vorgesehen sind. Beispielsweise kann es im Dynamic-Modus vorgesehen sein, dass bei einer langsamen Fahrt, beispielsweise vom Anfahren bis zu einer Geschwindigkeit bis 30 km/h, durchgehend ein Allradbetrieb vorgesehen ist, da im Dynamic-Modus insbesondere mit hohen Beschleunigungen durch einen Fahrer gerechnet wird, so dass jederzeit eine bestmögliche Traktion durch den zugeschalteten Allradantrieb ermöglicht wird.

Wird der Kraftwagen hingegen in einem Komfortmodus betrieben, erfolgt eine Vorsteuerung in solchen Situationen, in denen ein Allradantrieb einen positiven Komforteinfluss hat, beispielsweise im Hinblick auf einen Lenkeinfluss bei Querbeschleunigungen, einem spurstabilen Beschleunigen und dergleichen. Im Komfortmodus wird dabei auch möglichst frühzeitig wieder der Allradantrieb abgeschaltet.

Ist dahingehend der Automatikmodus des Antriebsstrangs 10 vorgewählt, erfolgt eine automatische Wahl des passenden Betriebsmodus, also beispielsweise zwischen dem Efficiency-Modus, dem Dynamic-Modus und dem Komfort-Modus, abhängig von einem erkannten Fahrertyp, aktuell erkannter Fahrsituationen und zu erwartenden Fahrsituationen. Die jeweiligen Betriebsmodi des Antriebsstrangs können auch automatisch in Abhängigkeit von weiteren augenblicklich aktivierten Betriebsmodi des Kraftwagens aktiviert werden. Beispielsweise kann der Kraftwagen über ein automatisiertes Getriebe verfügen, welches seinerseits einem Fahrer unterschiedliche Wahlmöglichkeiten zwischen Komfort, Sport und dergleichen ermöglicht. Die Betriebsmodi des Antriebsstrangs werden dabei in Abhängigkeit von dem ausgewählten Betriebsmodus des automatisierten Schaltgetriebes aufeinander abgestimmt.

Ferner ist es auch denkbar, dass der Kraftwagen über ein einstellbares Fahrwerk verfügt, welches beispielsweise zwischen einer Komfortstellung und einer Sportstellung eingestellt werden kann. In einem solchen Fall kann ebenfalls der Betriebsmodus des Antriebsstrangs in Abstimmung mit dem gewählten Betriebsmodus des Fahrwerks eingestellt sein. Allgemein kann es also vorgesehen sein, dass die Betriebsmodi des Antriebsstrangs mit weiteren voreinstellbaren oder automatisch einstellbaren Betriebsmodi unterschiedlichster Komponenten des Kraftwagens, z.B. einem ESP-Modus, abgestimmt werden.

Insgesamt wird durch die frühzeitige Zuschaltung des Allradantriebs eine entsprechend hohe Sicherheitsreserve bereitgestellt, so dass das Fahrverhalten des Kraftwagens rechtzeitig verbessert werden kann, bevor es zu einer relevanten Fahrsituation kommt, welche beim Antrieb einer einzigen Achse 14 entstehen könnte. Ferner wird durch die Überwachung und Auswertung der die Bewegung des Kraftwagens quantifizierenden und/oder beeinflussenden Größen ermöglicht, abzuschätzen, inwiefern ein zugeschalteter Allradantrieb wieder abgeschaltet werden kann, so dass der Kraftwagen möglichst energieeffizient betrieben werden kann.

## Patentansprüche

1. Verfahren zum Betreiben eines Antriebsstrangs (10) eines Kraftwagens, mit den Schritten:
- Erfassen von zumindest einer eine Bewegung des Kraftwagens quantifizierenden und/oder beeinflussenden Größe, wobei als eine die Bewegung des Kraftwagens quantifizierende und/oder beeinflussende Größe jeweilige Einzelradgeschwindigkeiten, ein Lenkradeinschlag, ein Lenkradeinschlagsgradient, eine Fahrpedalwert, ein Fahrpedalwertgradient, ein Bremspedalwert, eine Querbeschleunigung des Kraftwagens, eine Gierrate des Kraftwagens, eine Längsbeschleunigung des Kraftwagens und/oder eine aktuelle Übersetzung des Kraftwagens ermittelt werden;
- Zuschalten eines Allradantriebs des Kraftwagens in Abhängigkeit von der Größe;
wobei
basierend auf der zumindest einen Größe abgeschätzt wird, ob eine relevante Fahrsituation bevorsteht, wobei nur in diesem Fall der Allradantrieb vor Eintreten der relevanten Situation zugeschaltet wird, wobei unter einer relevanten Fahrsituation Fahrsituationen zu verstehen sind, bei welchen mit einer Abweichung zwischen einem tatsächlichen Fahrverhalten des Kraftwagens und einem von einem Fahrer vorgegebenen Fahrverhalten zu rechnen ist, oder jede Situation zu verstehen ist, in der ein für den Fahrer auflösbares unterschiedliches Fahrverhalten zwischen Einachs- und Allradbetrieb besteht;
**dadurch gekennzeichnet, dass**
nachdem der Allradantrieb zugeschaltet worden ist, anhand der zumindest einen Größe und/oder weiterer die Bewegung des Kraftwagens quantifizierenden und/oder beeinflussenden Größen ermittelt wird, ob ein Abschalten des Allradantriebs zu einer relevanten Fahrsituation führen würde, und falls dies nicht der Fall ist, der Allradantrieb nach einer definierten Haltezeit abgeschaltet wird.

2. Verfahren nach Anspruch 1,
**dadurch gekennzeichnet, dass**
beim Abschalten des Allradantriebs ein an einer lediglich im Allradbetrieb angetriebenen Sekundärachse vorgesehenes Achsgetriebe von einem Kraftfluss zwischen zwei Rädern getrennt wird.

3. Verfahren nach einem der vorhergehenden Ansprüche,
**dadurch gekennzeichnet, dass**
zum Abschätzen, ob eine relevante Situation bevorsteht, die zumindest eine die Bewegung des Kraftwagens quantifizierende und/oder beeinflussende Größe mit einem vorgegebenen Schwellwert verglichen wird.

4. Verfahren nach Anspruch 3,
**dadurch gekennzeichnet, dass**
jeweils unterschiedliche Werte für den Schwellwert und/oder die Haltezeit in Abhängigkeit von einem jeweils aktivierten Betriebsmodus des Antriebsstrangs (10) vorgegeben werden.

5. Verfahren nach Anspruch 4,
**dadurch gekennzeichnet, dass**
die jeweiligen Betriebsmodi des Antriebsstrangs (10) automatisch in Abhängigkeit von zumindest einem weiteren augenblicklich aktivierten Betriebsmodus des Kraftwagens aktiviert werden.

6. Verfahren nach einem der Ansprüche 4 oder 5,
**dadurch gekennzeichnet, dass**
die jeweiligen Betriebsmodi des Antriebsstrangs (10) zumindest während eines auswählbaren Automatikmodus in Abhängigkeit von der Art und Weise, wie der Kraftwagen von einem Fahrer bewegt wird, aktiviert werden.

7. Verfahren nach einem der Ansprüche 4 oder 5,
**dadurch gekennzeichnet, dass**
für die Zuschaltung und Abschaltung des Allradantriebs für die unterschiedlichen Betriebmodi jeweils unterschiedliche Schwellwerte und/oder Haltezeiten vorgegeben werden.

8. System zum Betreiben eines Antriebsstrangs (10) eines Kraftwagens, mit
- einer Erfassungseinrichtung, welche dazu ausgelegt ist, zumindest eine eine Bewegung des Kraftwagens quantifizierende und/oder beeinflussende Größe zu erfassen, wobei eine die Bewegung des Kraftwagens quantifizierende und/oder beeinflussende Größe jeweilige Einzelradgeschwindigkeiten, ein Lenkradeinschlag, ein Lenkradeinschlagsgradient, eine Fahrpedalwert, ein Fahrpedalwertgradient, ein Bremspedalwert, eine Querbeschleunigung des Kraftwagens, eine Gierrate des Kraftwagens, eine Längsbeschleunigung des Kraftwagens und/oder eine aktuelle Übersetzung des Kraftwagens sind;
- einer Steuereinrichtung (26, 28), welche dazu ausgelegt ist, einen Allradantrieb des Kraftwagens in Abhängigkeit von der Größe zuzuschalten;
wobei
die Steuereinrichtung (26, 28) dazu ausgelegt ist, basierend auf der zumindest einen Größe abzuschätzen, ob eine relevante Fahrsituation bevorsteht, und nur in diesem Fall den Allradantrieb vor Eintreten der relevanten Situation zuzuschalten, wobei unter einer relevanten Fahrsituation Fahrsituationen zu verstehen sind, bei welchen mit einer Abweichung zwischen einem tatsächlichen Fahrverhalten des Kraftwagens und einem von einem Fahrer vorgegebenen Fahrverhalten zu rechnen ist, oder jede Situation zu verstehen ist, in der ein für den Fahrer auflösbares unterschiedliches Fahrverhalten zwischen Einachs- und Allradbetrieb besteht;
**dadurch gekennzeichnet, dass**
die Steuereinrichtung (26, 28) dazu ausgelegt ist, nachdem der Allradantrieb zugeschaltet worden ist, anhand der zumindest einen Größe und/oder weiterer die Bewegung des Kraftwagens quantifizierenden und/oder beeinflussenden Größen zu ermittelt, ob ein Abschalten des Allradantriebs zu einer relevanten Fahrsituation führen würde, und falls dies nicht der Fall ist, den Allradantrieb nach einer definierten Haltezeit abzuschalten.

## Claims

1. A process for operating a drive train (10) of a motor vehicle, comprising the following steps:
- Detection of at least one measure quantifying and/or influencing the movement of the motor vehicle, wherein is determined a measure quantifying and/or influencing the movement of the motor vehicle, such as any single wheel speed, a steering wheel angle, a steering wheel angle gradient, an accelerator pedal value, an accelerator pedal value gradient, a brake pedal value, a lateral acceleration of the motor vehicle, a gear rate of the motor vehicle, a longitudinal acceleration of the motor vehicle and/or current translation of the motor vehicle;
- Connection of a four-wheel drive of the motor vehicle as a function of this measure;
wherein
based on the at least one measure it is estimated whether a relevant driving situation is imminent,
wherein the four-wheel drive is activated only in this case before the occurrence of the relevant situation, wherein under a relevant driving situation situations are to be understood in which a deviation between an actual road behaviour of the motor vehicle and a predefined road behaviour by a driver is to be expected, or any situation is to be understood in which a different road behaviour between two-wheel and four-wheel operation exists for the driver;
**characterized in that**
after the four-wheel drive is connected, it is determined on the basis of the at least one measure and/or measures further quantifying and/or influencing movement of the motor vehicle, whether disconnecting the four-wheel drive would lead to a relevant driving situation, and if not, disconnecting the four-wheel drive after a defined holding time.

2. A process according to claim 1,
**characterized in that**
on disconnecting the four-wheel drive an axle drive provided on a secondary axle driven in four-wheel drive is separated by a power flow between two wheels.

3. A process according to one of the preceding claims,
**characterized in that**
for estimating whether a relevant situation is imminent, the at least one measure quantifying and/or influencing the movement of the motor vehicle is compared with a pre-defined threshold value.

4. A process according to claim 3,
**characterized in that**
respectively different values are specified for the threshold value and/or the holding time, depending on a respectively activated operational mode of the drive train (10).

5. A process according to claim 4,
**characterized in that**
the respective operational modes of the drive train (10) are automatically activated depending on at least one other currently active operational mode of the motor vehicle.

6. A process according to any one of claims 4 or 5,
**characterized in that**
the respective operational modes of the drive train (10) are at least activated during a selectable automatic mode that depends on the manner the motor vehicle is being moved by a driver.

7. A process according to any one of claims 4 or 5,
**characterized in that**
for the connection and disconnection of the four-wheel drive for the different operational modes, respectively different threshold values and/or holding times are given.

8. A system for operating a drive train (10) of a motor vehicle with
- a detecting unit which is arranged to determine at least one measure quantifying and/or influencing the movement of the motor vehicle, wherein respective measures quantifying and/or influencing the movement of the motor vehicle are any single wheel speed, a steering wheel angle, a steering wheel angle gradient, an accelerator pedal value, an accelerator pedal value gradient, a brake pedal value, lateral acceleration of the motor vehicle, a gear rate of the motor vehicle, a longitudinal acceleration of the motor vehicle and/or a current translation of the motor vehicle;
- a control device (26, 28) that is arranged to connect a four-wheel drive of the motor vehicle, depending on the measure,
wherein
the control device (26, 28) is arranged to estimate on the basis of the at least one measure whether a relevant driving situation is imminent, and only in this case connect the four-wheel drive prior to the occurrence of the relevant situation, wherein under a relevant driving situation driving situations are understood where a deviation between an actual road behaviour of the motor vehicle and a predetermined road behaviour by a driver is present, or whether any situation is perceived which for the driver would involve resolvable different road behaviour between a two-wheel and four-while drive;
**characterized in that**
the control device (26, 28) is so arranged that after the four-wheel drive is connected, on the basis of the at least one measure and/or further quantifying and/or influencing measures, it is determined whether disconnecting the four-wheel drive would lead to a relevant driving situation, and if not, disconnecting the four-wheel drive after a defined holding time.

## Revendications

1. Procédé d'entraînement d'une chaîne cinématique (10) d'un véhicule automobile, comprenant les étapes consistant à :
- détecter au moins une grandeur quantifiant et/ou influençant un déplacement du véhicule automobile, dans lequel on détermine comme grandeur quantifiant et/ou influençant le déplacement du véhicule automobile les vitesses respectives des roues individuelles, l'angle de rotation du volant, un gradient de l'angle de rotation du volant, la valeur de la pédale de l'accélérateur, un gradient de la valeur de la pédale de l'accélérateur, la valeur de la pédale de frein, l'accélération transversale du véhicule automobile, la vitesse de, lacet du véhicule automobile, l'accélération longitudinale du véhicule automobile et/ou la vitesse relative courante du véhicule automobile ; et
- connecter une traction 4 x 4 du véhicule automobile en fonction de la grandeur ;
dans lequel :
on estime sur la base de la au moins une grandeur si une situation de conduite pertinente est imminente, dans laquelle dans ce cas seulement la traction 4 x 4 est connectée avant que n'intervienne la situation pertinente, dans lequel on entend par situation de conduite pertinente des situations de conduite dans lesquelles il faut compter sur un écart entre un comportement de conduite réelle du véhicule automobile et un comportement de conduite prédéterminé par un conducteur ou toute situation dans laquelle un comportement de conduite différent résoluble pour le conducteur apparaît entre la traction à deux roues et la traction 4 x 4 ;
**caractérisé en ce que**,
une fois que la traction 4 x 4 a été connectée, sur la base de la au moins une grandeur et/ou d'autres grandeurs quantifiant et/ou influençant le déplacement du véhicule automobile, on détermine si une déconnexion de la traction 4 x 4 mènerait à une situation de conduite pertinente et, si ce n'est pas le cas, la traction 4 x 4 est déconnectée après un temps de maintien défini.

2. Procédé selon la revendication 1,
**caractérisé en ce que**,
lors de la déconnexion de la traction 4 x 4, on sépare une transmission d'essieu prévue dans un essieu secondaire seulement entraîné en traction 4 x 4 d'un flux de puissance entre deux roues.

3. Procédé selon l'une quelconque des revendications précédentes,
**caractérisé en ce que**,
pour estimer si une situation pertinente est imminente, la au moins une grandeur quantifiant et/ou influençant le déplacement du véhicule automobile est comparée à une valeur de seuil prédéfinie.

4. Procédé selon la revendication 3,
**caractérisé en ce que** :
des valeurs respectivement différentes pour la valeur de seuil et/ou le temps de maintien sont prédéfinies en fonction d'un mode de fonctionnement respectivement activé de la chaîne cinématique (10).

5. Procédé selon la revendication 4,
**caractérisé en ce que** :
les modes de fonctionnement respectifs de la chaîne cinématique (10) sont activés automatiquement en fonction d'au moins un autre mode de fonctionnement du véhicule automobile activé instantanément.

6. Procédé selon l'une quelconque des revendications 4 ou 5,
**caractérisé en ce que** :
les modes de fonctionnement respectifs de la chaîne cinématique (10) sont activés au moins au cours d'un mode automatique sélectionnable en fonction du type et de la manière dont le véhicule automobile est conduit par un conducteur.

7. Procédé selon l'une quelconque des revendications 4 ou 5,
**caractérisé en ce que**,
pour la connexion et la déconnexion de la traction 4 x 4 pour les divers modes de fonctionnement, on prédéfinit respectivement différentes valeurs de seuil et/ou différents temps de maintien.

8. Système de fonctionnement d'une chaîne cinématique (10) d'un véhicule automobile comprenant :
- un dispositif de détection qui est conçu pour détecter au moins une grandeur quantifiant et/ou influençant un déplacement du véhicule automobile, dans lequel une grandeur quantifiant et/ou influençant le déplacement du véhicule automobile désigne les vitesses respectives des roues individuelles, l'angle de rotation du volant, un gradient de l'angle de rotation du volant, la valeur de la pédale de l'accélérateur, un gradient de la valeur de la pédale de l'accélérateur, la valeur de la pédale de frein, l'accélération transversale du véhicule automobile, la vitesse de lacet du véhicule automobile, l'accélération longitudinale du véhicule automobile et/ou la vitesse relative courante du véhicule automobile ; et
- un dispositif de commande (26, 28) qui est conçu pour connecter la traction 4 x 4 du véhicule automobile en fonction de la grandeur ;
dans lequel :
le dispositif de commande (26, 28) est conçu pour estimer sur la base de la au moins une grandeur si une situation de conduite pertinente est imminente et, seulement dans ce cas, connecter la traction 4 x 4 avant que n'intervienne la situation pertinente, dans lequel on entend par situation de conduite pertinente des situations de conduite dans lesquelles il faut compter sur un écart entre un comportement de conduite réelle du véhicule automobile et un comportement de conduite prédéterminé par un conducteur ou toute situation dans laquelle un comportement de conduite différent résoluble pour le conducteur apparaît entre la traction à deux roues et la traction 4 x 4 ;
**caractérisé en ce que** :
le dispositif de commande (26, 28) est conçu de manière, une fois que la traction 4 x 4 a été connectée, à déterminer sur la base de la au moins une grandeur et/ou d'autres grandeurs quantifiant et/ou influençant le déplacement du véhicule automobile si une déconnexion de la traction 4 x 4 mènerait à une situation de conduite pertinente et, si ce n'est pas le cas, déconnecter la traction 4 x 4 au bout d'un temps de maintien défini.
